# EUROPEAN PATENT APPLICATION

(11) **EP 4 397 634 A1**
(43) Date of publication of application: **10.07.2024**
(21) Application number: 22864002.5
(22) Date of filing: 17.06.2022
(51) Int. Cl.: C03B 11/08

(54) **MOLD FOR GLASS MOLDING AND METHOD FOR MOLDING GLASS MOLDED ARTICLE**

(30) Priority: 02.09.2021 JP 2021143549
(71) Applicant: RIKEN, Wako-shi, Saitama 351-0198 (JP); Tokyo Denki University, Tokyo 120-8551 (JP); Okamoto Glass Co., Ltd., Kashiwa-shi, Chiba 277-0872 (JP)
(72) Inventor: YAMAGATA, Yutaka, Wako-shi, Saitama 351-0198 (JP); MORITA, Shinya, Tokyo 120-8551 (JP); SUGIURA, Riki, Tokyo 120-8551 (JP); MARU, Tomohisa, Kashiwa-shi, Chiba 277-0872 (JP); KOTEGAWA, Shoji, Kashiwa-shi, Chiba 277-0872 (JP); YAMADA, Sumihiro, Kashiwa-shi, Chiba 277-0872 (JP); ITO, Chiharu, Kashiwa-shi, Chiba 277-0872 (JP)
(74) Representative: Patentanwälte Olbricht Buchhold Keulertz
(86) International application number: PCT/JP2022/024346
(87) International publication number: WO 2023/032414

(57) **Abstract**

[Solution] A mold 10 for glass molding includes a molding surface 1 having a surface shape according to a shape of one side of a glass molded article, a heat insulating portion 2 which is integrally formed with the molding surface 1 and which includes at least one cavity 2a in at least a partial region on a back surface side of the molding surface 1, and a base 3 which supports the heat insulating portion 2.

According to this configuration, the heat insulating portion 2 integrally formed with the molding surface 1 has a heat insulating property by including at least one cavity 2a in at least a partial region on a back surface side of the molding surface 1 (heat conductivity coefficient decreases). As a result, at the time of molding of the glass molded article through pressing by the molding surface 1, it is possible to suppress cooling of the glass molded article since heat of the glass molded article dissipates via the molding surface 1, and the mold can withstand large molding pressure and a high temperature at the time of the molding of the glass molded article since the heat insulating portion 2 is integrally formed with the molding surface.

## Description

### BACKGROUND

### 1. TECHNICAL FIELD

The present invention relates to a mold for glass molding and a method for molding a glass molded article.

### 2. RELATED ART

As a method of processing a glass molded article such as an optical element by using glass, a melt molding technique for pouring hot glass in a state close to a molten state into a mold to be molded, and a press molding technique for heating and softening a preform in a solid state for press molding in a mold have been proposed. According to the melt molding technique, since glass in a molten state which is as hot as 800 to 900 degrees C is dealt with, when a glass molded article contacts with a mold, a heat thereof immediately dissipates in the mold and cooling of the glass molded article occurs. Large residual stress or distortion due to cooling contraction remains inside the molded article. Therefore, an anneal process to remove those and a post-process to improve a molding precision are required. According to the press molding technique, the residual stress and the distortion can be reduced since heating and cooling are performed by using a heater. However, the heating and the cooling take a long period of time, and an issue occurs that an energy efficiency is low.

In response, for example, Patent Document 1 discloses a resin molding apparatus including a movable mold which advances towards a fixed mold for mold closing, a heat insulating layer formed on a bottom surface of the movable mold, and a transfer plate provided on the heat insulating layer. Resin is filled in a cavity defined by the fixed mold and the movable mold for the mold closing, so that a pattern of the transfer plate is transferred to the resin. At this time, since the heat insulating layer provided between the transfer plate and the movable mold includes a honeycomb structure, dissipation of heat of the molded resin into the movable mold is suppressed, and as a result, generation of the residual stress and the distortion due to the cooling contraction of the molded article can be prevented.

Patent Document 1: WO 2007/123210

### PROBLEMS TO BE SOLVED

However, in a case of resin molding, since a molding temperature of resin is approximately 300 degrees C, a resin-based adhesive or a brazing material can be used to fix a transfer plate and a heat insulating layer to a movable mold, but in a case of glass molding, since a molding temperature of glass reaches approximately 900 degrees C as described above, an adhesive or the like no longer functions, and it is difficult for such a mold for resin molding as disclosed in Patent Document 1 to have sufficient pressure resistance and heat resistance for glass molding.

### GENERAL DISCLOSURE

### Item 1

A mold for glass molding may include a molding surface having a surface shape according to a shape of one side of a glass molded article.

The mold for glass molding may include a heat insulating portion which is integrally formed with the molding surface and which includes at least one cavity in at least a partial region on a back surface side of the molding surface.

The mold for glass molding may include a base which supports the heat insulating portion.

### Item 2

The heat insulating portion may include a plurality of cavities two-dimensionally arranged in an intersecting plane with respect to a direction in which the molding surface is pressed.

### Item 3

An area ratio of the plurality of cavities to a wall which divides the plurality of cavities in the intersecting plane may be higher on a rim side as compared with a center in the intersecting plane.

### Item 4

The area ratio of the plurality of cavities to the wall which divides the plurality of cavities in the intersecting plane may be higher in a region in which a thin part of the glass molded article is pressed as compared with a region in which a thick part of the glass molded article is pressed.

### Item 5

At least one cavity among the plurality of cavities may extend in a direction in which the molding surface is pressed.

### Item 6

At least another cavity among the plurality of cavities may extend in a normal line direction of a back surface of the molding surface.

### Item 7

The plurality of cavities may form a honeycomb structure.

### Item 8

The heat insulating portion may have a constant thickness in the direction in which the molding surface is pressed.

### Item 9

A thickness of the heat insulating portion in the direction in which the molding surface is pressed may be larger in a region in which the thin part of the glass molded article is pressed as compared with a region in which the thick part of the glass molded article is pressed.

### Item 10

The base may be integrally formed with the heat insulating portion, and include a plurality of hole portions respectively communicating with the plurality of cavities.

### Item 11

A molding method of a glass molded article may include molding a glass molded article by using, for at least one side, one piece of the mold for glass molding according to any one of items 1 to 10.

The summary clause does not necessarily describe all necessary features of the embodiments of the present invention. The present invention may also be a sub-combination of the features described above.

### BRIEF DESCRIPTION OF THE DRAWINGS

Fig. 1 illustrates an external structure and an internal structure of a mold for glass molding according to the present embodiment.
Fig. 2 illustrates a flow of a molding method of a glass molded article by using the mold for glass molding.
Fig. 3 illustrates an analysis result of a cooling rate of the glass molded article in the mold for glass molding.
Fig. 4 illustrates a condition of press molding of the glass molded article.
Fig. 5 illustrates an evaluation result a geometrical accuracy of the glass molded article obtained through the press molding under the molding condition illustrated in Fig. 4.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

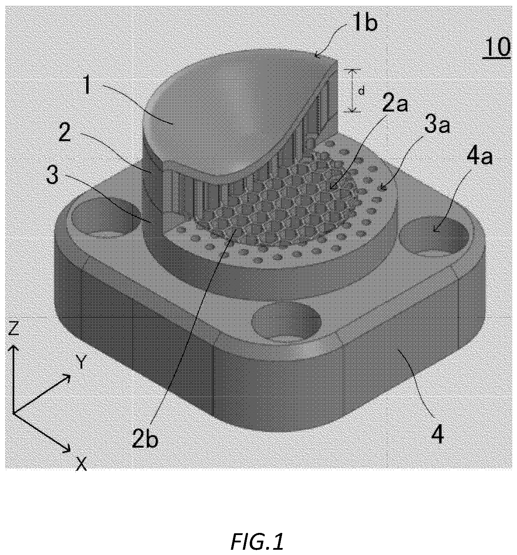

Fig. 1 illustrates an external structure of a mold 10 for glass molding according to the present embodiment, and an internal structure of the mold 10 for glass molding which is partially broken. The mold 10 for glass molding is a mold for glass molding which may withstand a high temperature (approximately 900 degrees C) of a glass molded article (which is also simply referred to as a molded article) in glass molding by means of a melt molding technique or a press molding technique, and which also has sufficient heat insulating property to suppress cooling of the molded article, so that it is possible to prevent generation of residual stress and distortion due to cooling contraction of the molded article. The mold 10 for glass molding includes a molding surface 1, a heat insulating portion 2, a base 3, and a flange 4. Note that a direction in which a glass material is compressed between the mold 10 for glass molding and a mold paired with the mold (that is, a direction in which the glass material is pressed by the molding surface 1) is set as a Z axis direction, and two axial directions which are orthogonal to each other in a plane orthogonal to the Z axis direction are set as an X axis direction and a Y axis direction.

The molding surface 1 is a plate-like member which presses the hot glass material in a molten state or a softened state. The molding surface 1 is solid with a thickness of approximately 1 mm, for example, and is formed into a dish-like curved concave shape as an example in the present embodiment so as to have a surface shape according to a shape of one side of the glass molded article. Note that the molding surface 1 includes an annular edge portion 1b on its outer edge. The molding surface 1 can be integrally formed by using a metal material with high heat insulating property such as, for example, SUS 400 series stainless steel, SUS 300 series stainless steel, or a nickel cobalt alloy. Note that a molding surface of the mold used to be paired with the mold 10 for glass molding at the time of molding the glass molded article by pressing the glass material is configured to have a surface shape according to a shape of another side of the glass molded article, such as, for example, a curved convex shape complementary to the concave shape of the molding surface 1.

The heat insulating portion 2 is a portion which supports the molding surface 1 and also suppresses dissipation of heat of the hot glass material via the molding surface 1, thereby suppressing cooling of the glass molded article and also uniformly cooling an entirety of the molded article. The heat insulating portion 2 includes at least one cavity 2a in at least a partial region on a back surface side of the molding surface 1. In the present embodiment, the heat insulating portion 2 includes a plurality of cavities 2a two-dimensionally arranged by being divided by a wall 2b in an XY plane below the molding surface 1 (on a -Z side). Herein, since the heat insulating portion 2 forms a honeycomb structure (that is, a hexagonal lattice) by the plurality of cavities 2a, the mold 10 for glass molding can withstand molding pressure applied to the molding surface 1 at the time of glass molding. Note that a part positioned below the edge portion 1b (on the -Z side) in the heat insulating portion 2 is formed to be solid without a cavity.

The plurality of cavities 2a, that is, the wall 2b which divides those cavities may be formed so as to extend in a direction of the molding pressure applied to the molding surface 1 at the time of glass molding. For example, at least one cavity among the plurality of cavities 2a and a wall which divides this cavity extend in the Z axis direction. In the present embodiment, all the cavities 2a and the wall 2b extend in the Z axis direction. As a result, the heat insulating portion 2 can withstand the pressure applied via the molding surface 1 at the time of molding. In addition, the at least one cavity among the plurality of cavities 2a and the wall which divides this cavity extend in a normal line direction relative to the back surface of the molding surface 1. As a result, it is possible to withstand a component force in the normal line direction out of forming pressure applied to the heat insulating portion 2 via the molding surface 1 at the time of molding.

A width of a plurality of cavities 2a and a thickness of the wall 2b which divides those cavities can be optionally designed. For example, a mold used to mold the glass molded article with a thick center and also a thin rim may be designed such that an area ratio of the plurality of cavities 2a to the wall 2b which divides the plurality of cavities 2a in the XY plane is higher on a rim side as compared with the center of the heat insulating portion 2. As a result, the heat insulating property on the rim side of the molding surface 1 where a thin rim portion of the glass molded article is pressed can be improved, and cooling of the rim portion which easily cools down can be suppressed. As a result, cooling of the entirety of the glass molded article can be constant. More generally, the heat insulating portion 2 may be designed such that the area ratio of the plurality of cavities 2a to the wall 2b which divides the plurality of cavities 2a in the XY plane is higher in a region where the thin part of the glass molded article is pressed as compared with a region in which the thick part of the glass molded article is pressed. As a result, the heat insulating property for the thin part of the glass molded article which easily cools down can be improved, and cooling of the thin part can be suppressed, so that the cooling of the entirety of the glass molded article can be constant.

A thickness d in the Z axis direction of the heat insulating portion 2 is required to be a sufficient thickness so as to obtain a requested heat insulating property. The thickness d may be constant in the XY plane as long as the thickness is the sufficient thickness or larger. In such a case, both an upper surface and a lower surface of the heat insulating portion 2 match the surface shape of the molding surface 1. As a result, a uniform heat insulating property in the XY plane is obtained, that is, a distribution of a cooling rate in the XY plane becomes constant. In addition, the heat insulating portion 2 may be designed such that the thickness d of the heat insulating portion 2 is larger in the region where the thin part of the glass molded article is pressed as compared with the region where the thick part of the glass molded article is pressed. As a result, the heat insulating property for the thin part of the glass molded article which easily cools down can be improved, and cooling of the thin part can be suppressed, so that the cooling of the entirety of the glass molded article can be constant.

The base 3 is a part which supports the heat insulating portion 2. In the present embodiment, the base 3 is integrally formed with the heat insulating portion 2, and has a cylindrical shape with an upper surface which is shaped to be concave according to the shape of the heat insulating portion 2. The base 3 includes a plurality of hole portions 3a respectively communicating with the plurality of cavities 2a of the heat insulating portion 2 to reach a bottom surface of the base 3. As will be described below, when the mold 10 for glass molding is integrally molded by using a metal 3D printer, the plurality of hole portions 3a is used to remove metal powder from the inside of the plurality of cavities 2a of the heat insulating portion 2. Accordingly, the plurality of hole portions 3a has a width smaller than the plurality of cavities 2a which is such a width that the metal powder can be removed. Note that the bottom portion of the base 3 protrudes from a bottom surface of the flange 4 which will be described below in a -Z direction.

The flange 4 is a part overhanding in an outer circumferential direction from a side surface of the base 3, and has a substantially square shape when viewed from above in the present embodiment. Hole portions 4a in a circular shape penetrate through four corner portions of the flange 4 in the Z axis direction. At the time of glass molding by using the mold 10 for glass molding, by fitting the bottom portion of the base 3 into a hole portion of a movable stand (or a fixed stand) of a molding apparatus, placing the flange 4 on the movable stand (or the fixed stand), and threading screws through the hole portions 4a of the flange 4, the mold 10 for glass molding can be fixed to the movable stand (or the fixed stand).

The mold 10 for glass molding can be integrally formed by means of a powder sintering method using, for example, a 3D printer. The mold 10 for glass molding is designed in such a manner that the molding surface 1 is designed based on a product shape of the glass molded article, the heat insulating portion 2 with the constant thickness d is arranged below the molding surface 1, and the base 3 and the flange 4 are further arranged. Furthermore, by means of an analysis method such as a finite element technique, it is confirmed that the mold may withstand expected pressing pressure, and a requested heat insulating property (low heat conductivity coefficient) is obtained. Based on that, a powder metal layer is provided on a stage by using the 3D printer, and powdered metal is sintered by laser irradiation to be hardened. Thereafter, a process in which the stage is lowered to provide a next powder metal layer on the hardened metal layer to perform the laser irradiation is repeated. By stacking up the metal layers, the mold 10 for glass molding is formed. Note that as the powdered metal, powder of a metal material with a high heat insulating property such as, for example, SUS 400 series stainless steel, SUS 300 series stainless steel, or a nickel cobalt alloy may be used. Then, the molding surface 1 of the mold 10 for glass molding is precisely processed. For example, by using cutting tools made of cemented carbide or cBN (cubic boron nitride), the surface is cut by an ultraprecise machining apparatus or the like to be processed to a high precision of a several µm or approximately 1 µm or less. Furthermore, subsequently, by reducing a surface roughness to approximately 100 nm or less in an approximate average surface roughness by a polishing process using a whetstone or free abrasive grains, the molding surface can be obtained which is appropriate to molding of a glass lens having a transparent surface. Lastly, glass molding is performed.

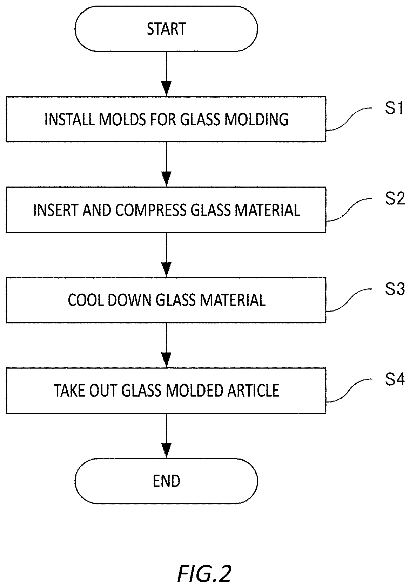

Fig. 2 illustrates a flow of a molding method of the glass molded article by using the mold 10 for glass molding.

In step S1, the two molds 10 for glass molding respectively having the paired molding surfaces 1 are respectively fixed to the movable stand and the fixed stand of the molding apparatus. Then, the movable stand to which one of the molds 10 for glass molding is fixed is spaced apart from the fixed stand to provide a gap between the two molds 10 for glass molding.

In step S2, a plate-like glass material which is heated to be put into a softened state is inserted between the two molds 10 for glass molding, and the movable stand is driven towards the fixed stand by using, for example, an electric servo motor to compress the glass material by the molding surfaces 1 of the two molds 10 for glass molding at pressing pressure of 1 to 2 MPa, for example. Herein, since the plurality of cavities of the heat insulating portion 2 is formed into a honeycomb structure, the mold 10 for glass molding can withstand the large pressing pressure.

In step S3, the glass material is cooled down while a state in which the glass material is compressed by the two molds 10 for glass molding is maintained. Herein, since the mold 10 for glass molding includes the heat insulating portion 2 below the molding surface 1, dissipation of heat of the glass molded article via the molding surface 1 can be suppressed, and the glass molded article is uniformly cooled down throughout, so that generation of residual stress and distortion due to cooling contraction of the molded article can be prevented.

In step S4, the movable stand is spaced apart from the fixed stand, and the glass molded article is taken out from the space between the two molds 10 for glass molding. After the glass molded article is taken out, the glass molded article may be created by further repeating steps S1 to S5.

In glass molding, it is known that a cooling rate from a melting temperature or a softening temperature (molding temperature) of the glass material to an approximate glass transition point largely affects a magnitude of internal residual stress and distortion. This is because a coefficient of thermal expansion of the glass material rapidly changes at a temperature of the glass transition point or higher. Since the glass material cools down from an outer circumferential portion at the time of cooling, hardening starts from the outer circumferential portion (viscosity increases in a precise sense), and subsequently, the inside hardens and also contracts. Therefore, tensile stress remains inside, and distortion (that is, a geometrical error) is generated also because of an effect from a thermal contraction. In order to suppress the residual stress and the distortion which have been described above, it is important to perform cooling to be close to the glass transition point slowly yet for an appropriate period of time such that a production efficiency is not reduced.

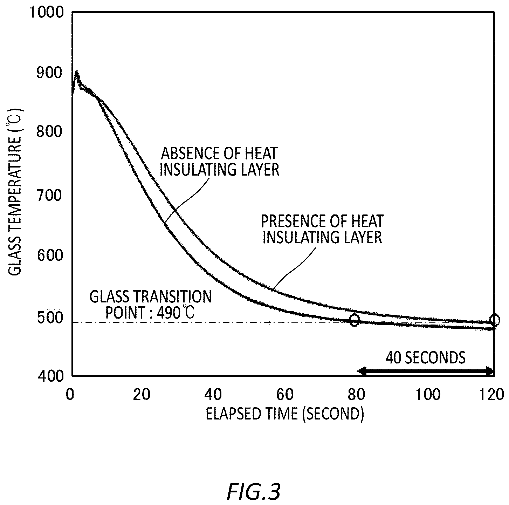

Fig. 3 illustrates an analysis result of a cooling rate of the glass molded article in the mold 10 for glass molding. While a temperature of the two molds 10 for glass molding was set at 465 degrees C, an initial temperature of the glass material compressed by those molds was set at 965 degrees C, and a heat conductivity coefficient of the heat insulating portion 2 (area ratio of the wall 2b in an XY cross section of the heat insulating portion 2) was set at 25%, the cooling rate of the glass material with respect to the mold 10 for glass molding (with the presence of the heat insulating layer) was analyzed by means of a finite element technique. As a comparative example, a cooling rate of the glass material with respect to a mold for glass molding in which the heat insulating portion 2 was formed to be solid (with the absence of the heat insulating layer) was similarly analyzed. A cooling curve in the comparative example (with the absence of the heat insulating layer) rapidly decreases to the glass transition point (490 degrees C) in approximately 80 seconds, but the cooling rate with respect to the mold 10 for glass molding (with the presence of the heat insulating layer) relatively slowly decreases to the glass transition temperature in approximately 120 seconds. Since the heat insulating portion 2 was provided to the mold 10 for glass molding, the heat insulating property was obtained, and in this example, it became possible to lengthen the cooling time by approximately 40 seconds.

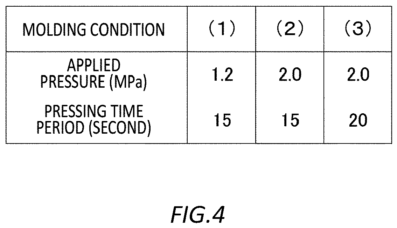

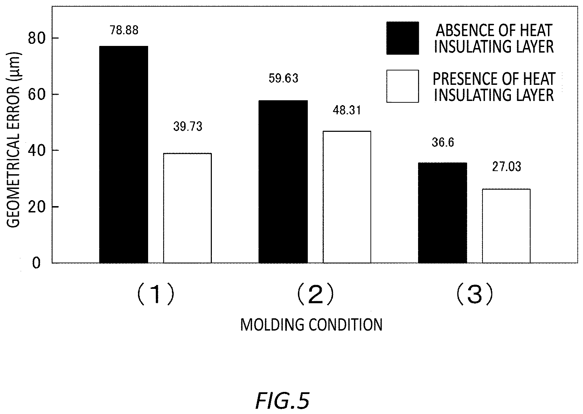

Fig. 4 and Fig. 5 respectively illustrate a condition of press molding of the glass molded article, and an evaluation result of the geometrical error of the glass molded article obtained through press molding by using the mold 10 for glass molding (with the presence of the heat insulating layer) under this molding condition. The geometrical error is given by a peak-to-valley (PV) value. As a comparative example, a similar evaluation result in a case where the mold for glass molding having the heat insulating portion 2 formed to be solid (with the absence of the heat insulating layer) is used is also illustrated. In the comparative example (with the absence of the heat insulating layer), the geometrical error is further reduced as applied pressure is (2) and (3) of 2 MPa which is larger than (1) of 1.2 MPa and as a pressing time period is (3) of 20 seconds which is longer than (1) and (2) of 15 seconds, that is, by pressing the glass material at larger applied pressure for a longer period of time. On the other hand, in a case of the mold 10 for glass molding (with the presence of the heat insulating layer) according to the present embodiment, the geometrical error is reduced by pressing the glass material over a period of time as long as 20 seconds at the applied pressure as large as (3) of 2 MPa, but even when the applied pressure is as small as (1) of 1.2 MPa or the pressing time period is as short as (2) of 15 seconds, it is found that the geometrical error is sufficiently small. Accordingly, it is found that by using the mold 10 for glass molding provided with the heat insulating portion 2, since the glass molded article uniformly cools down throughout, the generation of the residual stress and the distortion due to the cooling contraction of the molded article can be prevented, and a geometrical accuracy of the glass molded article can be improved.

The mold 10 for glass molding according to the present embodiment includes the molding surface 1 having a surface shape according to a shape on one side of the glass molded article, the heat insulating portion 2 which is integrally formed with the molding surface 1 and which includes at least one cavity 2a in at least a partial region on a back surface side of the molding surface 1, and the base 3 which supports the heat insulating portion 2. According to this configuration, the heat insulating portion 2 integrally formed with the molding surface 1 has the heat insulating property by including at least one cavity 2a in the at least partial region on the back surface side of the molding surface 1 (the heat conductivity coefficient decreases). As a result, at the time of molding of the glass molded article through pressing by the molding surface 1, it is possible to suppress cooling of the glass molded article since the heat of the glass molded article dissipates via the molding surface 1, and the mold can withstand the large molding pressure and the high temperature at the time of the molding of the glass molded article since the heat insulating portion 2 is integrally formed with the molding surface.

In addition, the glass molded article can be molded by using, for at least one side, one piece of the mold for glass molding according to the present embodiment. In addition, the glass molded article can be molded by using two pieces of the mold 10 for glass molding according to the present embodiment which respectively having the paired molding surfaces.

Note that in the mold 10 for glass molding according to the present embodiment, the heat insulating portion 2 is provided below the molding surface 1, but the heat insulating portion 2 may further be provided on a lateral side. As a result, dissipation of the heat of the glass molded article from a side surface of the molding surface 1 can be suppressed.

Note that the mold 10 for glass molding according to the present embodiment is configured such that the glass material is compressed by the two paired molds to mold the glass molded article. However, instead of this, the molding surface 1 may be formed in a manner that a cavity is formed by two molds, and the molten glass material is contained inside the cavity so as to mold the glass molded article.

While the present invention has been described above by way of the embodiments, the technical scope of the present invention is not limited to the above described embodiments. It is apparent to persons skilled in the art that various modifications or improvements can be made to the above described embodiments. It is also apparent from the description of the claims that embodiments added with such modifications or improvements can be included in the technical scope of the present invention.

The operations, procedures, steps, stages, or the like of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

1: molding surface; 1b: edge portion; 2: heat insulating portion; 2a: cavity; 2b: wall; 3: base; 3a: hole portion; 4: flange; 4a: hole portion; 10: mold for glass molding.

## Claims

1. A mold for glass molding, the mold comprising:
a molding surface having a surface shape according to a shape of one side of a glass molded article;
a heat insulating portion which is integrally formed with the molding surface and which includes at least one cavity in at least a partial region on a back surface side of the molding surface; and
a base which supports the heat insulating portion.

2. The mold for glass molding according to claim 1, wherein the heat insulating portion includes a plurality of cavities two-dimensionally arranged in an intersecting plane with respect to a direction in which the molding surface is pressed.

3. The mold for glass molding according to claim 2, wherein an area ratio of the plurality of cavities to a wall which divides the plurality of cavities in the intersecting plane is higher on a rim side as compared with a center in the intersecting plane.

4. The mold for glass molding according to claim 2 or 3, wherein an area ratio of the plurality of cavities to a wall which divides the plurality of cavities in the intersecting plane is higher in a region in which a thin part of the glass molded article is pressed as compared with a region in which a thick part of the glass molded article is pressed.

5. The mold for glass molding according to any one of claims 2 to 4, wherein at least one cavity among the plurality of cavities extends in a direction in which the molding surface is pressed.

6. The mold for glass molding according to any one of claims 2 to 5, wherein at least another cavity among the plurality of cavities extends in a normal line direction of a back surface of the molding surface.

7. The mold for glass molding according to any one of claims 2 to 6, wherein the plurality of cavities forms a honeycomb structure.

8. The mold for glass molding according to any one of claims 2 to 7, wherein the heat insulating portion has a constant thickness in the direction in which the molding surface is pressed.

9. The mold for glass molding according to any one of claims 2 to 7, wherein a thickness of the heat insulating portion in the direction in which the molding surface is pressed is larger in a region in which a thin part of the glass molded article is pressed as compared with a region in which a thick part of the glass molded article is pressed.

10. The mold for glass molding according to any one of claims 2 to 9, wherein the base is integrally formed with the heat insulating portion, and includes a plurality of hole portions respectively communicating with the plurality of cavities.

11. A molding method of a glass molded article, the molding method comprising:
molding a glass molded article by using, for at least one side, one piece of the mold for glass molding according to any one of claims 1 to 10.
